# FASCICULE DE BREVET EUROPEEN

(11) **EP 2 409 425 B1**
(45) Date de publication et mention de la délivrance du brevet: **16.05.2018**
(21) Numéro de dépôt: 10715944.4
(22) Date de dépôt: 15.03.2010
(51) Int. Cl.: H04B 7/185

(54) **CHARGE UTILE D'UN AIS SATELLITE ET PROCÉDÉ CORRESPONDANT**
NUTZLAST EINES AIS SATELLITEN UND EIN ENTSPRECHENDES VERFAHREN
PAYLOAD OF AN AIS SATELLITE AND A CORRESPONDING METHOD

(30) Priorité: 17.03.2009 FR 0951672
(43) Date de publication de la demande: 25.01.2012
(73) Titulaire: Centre National d'Etudes Spatiales, 75001 Paris (FR)
(72) Inventeur: DIEZ, Hubert, 31490 Leguevin (FR); LEMAITRE, Julia, 31000 Toulouse (FR); RAIZONVILLE, Philippe, 31400 Toulouse (FR)
(74) Mandataire: Lavoix
(86) Numéro de dépôt international: PCT/FR2010/050462
(87) Numéro de publication internationale: WO 2010/106280

(56) Documents cités:
- US-A1- 2008 304 597

## Description

L'invention se rapporte à un système à base de satellites défilants superposé à un système de navigation maritime dénommé AIS (en anglais Automatic Identification System) mis en oeuvre au niveau du sol, destiné à la prévention de collisions entre navires et à la surveillance de trajectoires maritimes de navires.

L'invention se rapporte également à un procédé de traitement de signaux AIS, émis depuis le sol et reçus par les satellites, et à une charge utile permettant la mise en oeuvre du procédé de traitement.

Classiquement, des systèmes à base de satellites, défilants selon des orbites basses ou moyennes, et destinés à surveiller la navigation maritime de vaisseaux sur de larges zones d'observation sont connus.

Il est également connu pour de tels systèmes spatiaux d'utiliser les mêmes signaux que ceux du système de navigation maritime AIS mis en oeuvre tant au niveau de la couche physique qu'aux niveaux de la couche de transport et la couche d'accès selon la classification du modèle OSI (dénomination anglaise de la norme Open Interconnexion Systems). Les différentes couches normalisées des signaux AIS sont décrites dans la recommandation ITU-R M.1371-3.

Ainsi, le document US 2008/0304597 A1 décrit un système à base de satellites défilants permettant la détection et la surveillance de la navigation de vaisseaux maritimes.

Ce système satellitaire utilise les signaux émis par et pour le système maritime au sol AIS en exploitant leurs couches physique, de transport et d'accès définies selon la recommandation ITU-R M.1371-3 précitée et en y intégrant les particularités inhérentes à un canal de transmission mettant en oeuvre la réception par un satellite défilant. Ces particularités concernent notamment les variations fréquentielles dues à des valeurs de dérives Doppler différentes entres divers émetteurs et des variations de retard de propagation entre divers émetteurs.

En particulier, les retards de propagation observés en réception au satellite entre des salves émises par des émetteurs AIS dont les instants d'émission sont non coordonnés en cas d'absence de portée radioélectrique locale de leurs navires associés sont à l'origine de collisions entre salves lors de la réception au niveau du satellite.

US 2008/0304597 A1 décrit une architecture de charge utile comprenant un réseau d'antennes réception dans la bande de fréquences VHF (dénommé en anglais Very High Frequency). Chaque antenne de réception VHF est connectée à un récepteur propre et un convertisseur analogique/numérique propre reliés en série entre eux pour former une voie de réception d'un signal AIS numérisé distincte. La charge utile comprend une mémoire de masse apte à sauvegarder de manière indépendante chacun des signaux de sortie AIS reçus en même temps par les antennes de réception et numérisés respectivement par les convertisseurs analogiques/numériques.

US 2008/0304597 A1 décrit un premier mode de réalisation dans lequel les signaux reçus par chaque antenne sont combinés à bord du satellite de sorte que le réseau forme une antenne active et le signal résultant est ensuite démodulé à bord du satellite. Dans ce premier mode de réalisation, la complexité de la charge utile est importante.

US 2008/0304597 A1 décrit un deuxième mode dé réalisation dans lequel les signaux reçus par chaque antenne, numérisés et sauvegardés de manière indépendante sont retransmis vers le sol en vue d'un traitement complexe mettant en oeuvre une combinaison des signaux. Cette architecture augmente le temps d'accès des navires à des salves démodulées en données utiles.

Le problème technique est d'améliorer l'efficacité de la démodulation des salves AIS autant en termes d'un taux élevé de succès de la démodulation indépendant de la zone de trafic survolée que de rapidité d'accès des stations locales de surveillance à des données utiles AIS.

A cet effet, l'invention a pour objet une charge utile de satellite conforme à la revendication 1.

Suivant des modes particuliers de réalisation, la charge utile de satellite comporte l'une ou plusieurs des caractéristiques des revendications 2 à 14.

L'invention a également pour objet un système de satellites conforme à la revendication 15.

Suivant des modes particuliers de réalisation, le système comporte l'une ou plusieurs des caractéristiques de la revendication 16.

L'invention a également pour objet un procédé de traitement conforme à la revendication 17.

Suivant des modes particuliers de réalisation, le procédé comporte l'une ou plusieurs des caractéristiques 18 à 21.

L'invention sera mieux comprise à la lecture de la description d'une unique forme de réalisation qui va suivre, donnée uniquement à titre d'exemple et faite en se référant aux dessins sur lesquels :
- la Figure 1 est une vue d'un système de satellites selon l'invention,
- la Figure 2 est une vue de l'architecture de la charge utile d'un satellite du système décrit à la figure 1,
- la Figure 3 est une vue de l'implantation du réseau d'antennes VHF de la charge utile décrite à la Figure 2 sur la face Terre du satellite de la Figure 1,
- la Figure 4 est un ordinogramme du procédé de traitement mis en oeuvre par la charge utile de la figure 2 et le système de satellites décrit à la figure 1,
- la Figure 5 est une variante de l'ordinogramme de la Figure 4,
- la Figure 6 est une vue d'un diagramme de rayonnement équivalent obtenu par traitement différé au sol et correspondant à une couverture de l'ensemble Europe et mer Méditerranée,
- la Figure 7 une vue d'un diagramme de rayonnement équivalent obtenu par traitement différé au sol et correspondant à une couverture resserrée sur la mer Méditerranée, et
- la Figure 8 une vue d'un diagramme de rayonnement équivalent obtenu par traitement différé au sol et correspondant à une couverture, resserrée en forme de demi-lune, de la portion maritime australo-occidentale de l'Afrique.

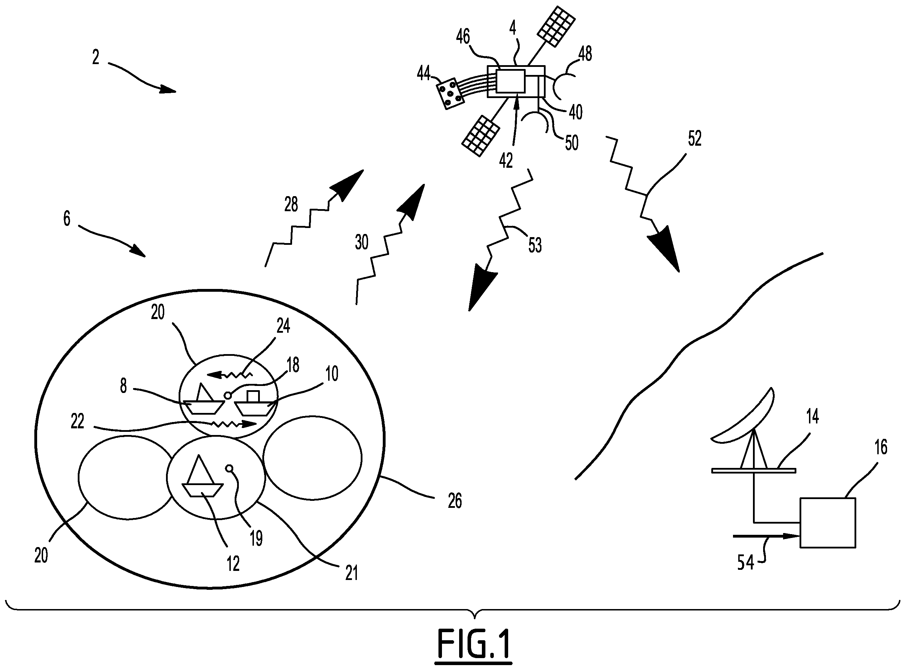

Le système 2 de satellites suivant la Figure 1 comprend une constellation de satellites 4 à orbites basses typiquement des orbites dont l'altitude est comprise entre 500 km et 1500 km, un ensemble 6 de navires 8, 10, 12 émettant des signaux radioélectriques de type AIS, une première station satellitaire de réception au sol 14 raccordée à un centre de traitement 16 des signaux AIS de navigation, et au moins une deuxième station locale 18, 19 de surveillance et de réception de signaux AIS démodulés à bord d'au moins un satellite 4.

La ou les stations locales 18, 19 sont situées sur des portions de terre, le cas échéant sur des îles, voire exceptionnellement sur des navires servant le cas échéant de relais d'accès aux navires 8, 10, 12.

Les navires 8, 10, 12 voguant sur une mer ou un océan au niveau du sol, de différents tonnages et pouvant inclure des navires de plaisance, sont aptes à communiquer entre eux par l'intermédiaire de signaux radioélectriques portant des messages de données de type AIS définis selon la recommandation ITU-R M.1371-3.

Plus précisément, la recommandation ITU-R M.1371-3 définit les caractéristiques d'un système d'identification automatique universel de bord pour navire, utilisant l'accès multiple par répartition dans le temps et fonctionnant dans la bande attribuée aux services mobiles maritimes en ondes métriques.

Localement au niveau de la mer, c'est-à-dire à l'intérieur de la zone de portée des émetteurs AIS embarqués à bord des navires, typiquement 25 nm (nm étant la dénomination anglaise de miles nautiques), les émetteurs des navires 8, 10, 12 s'auto-organisent selon le protocole SOTDMA (dénomination anglaise de Self Organized Time Division Multiplex Access) afin de ne pas émettre leurs salves respectives dans des mêmes tranches de temps. De cette manière sont définies des zones locales de portée radioélectrique au niveau de la mer.

Sur la figure 1, deux zones locales 20, 21 sont représentées. Les navires 8 et 10 par leurs émetteurs AIS appartiennent à la même zone locale 20 tandis que le navire 12 appartient à une zone différente 21, l'émetteur du navire 12 étant hors de portée des récepteurs des navires 8 et 10.

Une zone de couverture globale 26 de réception satellitaire des signaux AIS émis depuis le sol par les navires 8, 10, 12 est représentée sur la figure 1. La zone de couverture globale 26 correspond à la zone de visibilité radioélectrique du satellite qui survole à un moment prédéterminé les zones locales 20, 21 dans lesquelles se trouvent les navires 8, 10 et 12. Le satellite 4 permet ainsi d'accéder à une vision plus globale du trafic des navires au travers des émetteurs AIS des navires prévus à l'origine seulement pour une gestion locale de la navigation.

Le satellite 4 est apte à recevoir les signaux radioélectriques de type AIS de chacun des émetteurs, par exemple ceux des navires 8 et 10, au travers respectivement des liaisons radioélectriques VHF (dénomination anglaise de Very High Frequency) 28 et 30 représentées par des flèches.

Le satellite 4 comprend une plateforme 40 adaptée aux orbites basses et une charge utile 42 comprenant une antenne 44 de réception VHF des signaux AIS, un répéteur 46 avec du traitement embarqué, une première antenne et une deuxième antenne de retransmission 48, 50.

L'antenne de réception 44 est raccordée au travers du répéteur 46 aux antennes de retransmission 48, 50.

La première antenne de retransmission 48 est accordée à la fréquence d'une première liaison radioélectrique 52 permettant l'acheminement d'un volume élevé de donnés à la première station satellitaire de sol 14. La première liaison radioélectrique 52 est une liaison de télémesure fonctionnant par exemple en bande C, d'autres bandes pouvant être également utilisées telles que notamment la bande S, X, Ku et Ka.

La deuxième antenne de retransmission 50 est accordée à la fréquence d'une deuxième liaison radioélectrique 53 permettant l'acheminement de données utiles AIS de navigation aux stations de réception locales 18, 19 situées respectivement dans les zones locales 20, 21 et servant de relais d'accès locaux respectivement aux navires 8, 10 et 12. La deuxième liaison radioélectrique est une liaison de télécommunication fonctionnant par exemple en bande L.

Les signaux radioélectriques émis par les émetteurs des navires 8, 10 et 12, ici à la fréquence VHF et reçues par l'antenne de réception 44, sont aptes à transporter des messages de données AIS.

Chaque message AIS est codé par un codage de type NRZI (Non Retour à Zéro Inversé) avec changement de niveau en présence d'un bit à zéro, puis modulé par une modulation de type GMSK (dénomination anglaise de Gaussian Minimum Shift Keying) sous un débit de 9600 bits/s autour de deux fréquences porteuses comprises dans la bande VHF formant deux canaux situés autour de 162 MHz, un premier canal à 161,975 MHz et un deuxième canal à 162,025 MHz.

La puissance d'émission des émetteurs des navires 8, 10 et 12 est de 2W ou de 12,5 W selon la classe de l'émetteur.

Les messages AIS sont émis par salves à l'intérieur de tranches de temps, larges de 26,6 ms, et faisant parties d'une trame d'accès de 2250 tranches de temps d'une durée totale d'une minute.

Les messages AIS sont répétés périodiquement et émis alternativement sur les deux canaux.

Selon la position de l'émetteur du navire par rapport au satellite 4, le temps de propagation est très différent. Dans le cas par exemple d'un satellite situé à 600 kms d'altitude, le temps de propagation est compris entre 2 ms et 9,4 ms suivant la position de l'émetteur au sol, ce qui représente un écart maximum entre deux signaux AIS à l'arrivée au satellite 4 égal à la durée de 71 symboles de type GMSK.

Il existe ainsi des configurations de réception de signaux AIS dans lesquelles deux tranches de temps correspondant à des salves différentes se recouvrent entre elles, ce qui signifie que deux types de salves AIS sont reçues au niveau du satellite, des salves exemptes de collision par une autre salve et des salves présentant un état de collision avec une ou plusieurs autres salves.

Etant donné le champ de visibilité radioélectrique très grand observé depuis le satellite 4, de nombreux navires hors de portée locale AIS dans une même zone locale 20 les uns des autres sont observés. Ces navires ont une probabilité non nulle d'émettre leurs salves respectives dans une même tranche de temps à l'arrivée au satellite et une superposition des signaux AIS dans le temps et en fréquence peut avoir lieu.

En fonction de la densité en navires dans la zone observée 26 à un instant prédéterminé de survol de cette zone par le satellite 4, ces collisions de salves sont plus ou moins nombreuses.

En fonction de la densité en navires dans la zone globale de réception 26 et d'un seuil prédéterminé de comparaison de la densité, la zone de réception 26 est qualifiée de dense ou de peu dense.

Le centre de traitement 16 comprend une entrée 54 apte à recevoir une information d'identification de la zone survolée par le satellite associé à un moment de réception t du signal AIS, S(t) au niveau du satellite 4.

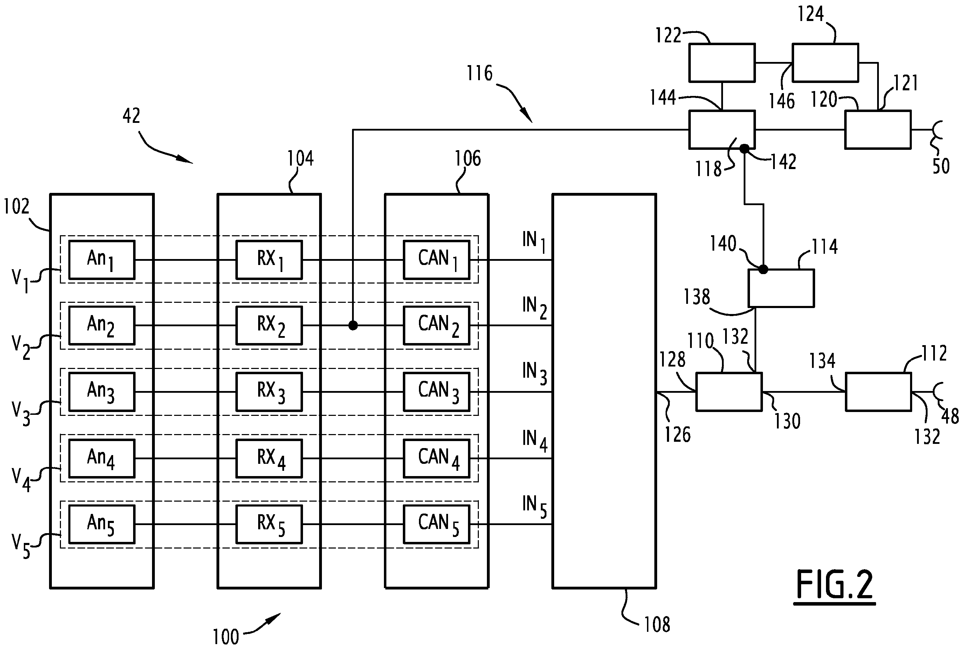

Suivant la figure 2, la charge utile 42 comprend une première chaine de transmission 100 comportant une antenne de réception VHF 44 formé par un réseau 102 d'au moins deux antennes de réception VHF pour recevoir les signaux AIS, par exemple au nombre de cinq et référencées respectivement Anᵢ, i étant un indice entier de voie d'antenne Vᵢ variant ici de 1 à 5, un ensemble 104 de récepteurs RXᵢ associé, un ensemble 106 de convertisseurs analogique-numériques CANᵢ, un multiplexeur 108, une mémoire de masse 110, un premier émetteur de données 112, et la première antenne de retransmission 48, un moyen de commande 114 de la mémoire de masse 110.

La charge utile 42 comprend une deuxième chaine de transmission 116 comportant un démodulateur AIS 118, un deuxième émetteur 120 et la deuxième antenne de retransmission 50.

La charge utile 42 comprend également un moyen d'identification 122 de zone locale et le cas échéant d'une station locale associée, l'identification étant effectuée à partir des coordonnées des navires émetteurs de salves ainsi que des moyens 124 de détection de visibilité de station locale et de déclenchement d'une retransmission d'une salve AIS démodulée vers le sol.

Pour chaque valeur d'indice de voie i, la voie d'antenne Vi comprend en série l'antenne Anᵢ, le récepteur RXᵢ et le convertisseur analogique-numérique CANᵢ.

Les antennes de réception Anᵢ sont accordées à une même bande VHF de réception prédéterminée, séparées entre elles et disposées selon une configuration géométrique prédéterminée par rapport au référentiel propre au satellite.

Chaque antenne de réception Anᵢ est apte à fournir en même temps un signal de sortie, différent en fonction de sa position respective dans un référentiel propre au satellite, le signal de sortie correspondant à une même salve reçue dont la démodulation est recherchée.

Chaque récepteur RXᵢ est de structure classique et comprend en série un amplificateur faible bruit et un convertisseur abaisseur de fréquences non représentés sur la Figure 2.

Le multiplexeur 108 comprend cinq entrées INᵢ, raccordées respectivement aux convertisseurs analogiques-numériques CANᵢ, et une sortie 126, raccordée en entrée à la mémoire de masse 110.

Le multiplexeur 108 est apte à sérialiser en des données, indépendantes à enregistrer, les signaux numérisés en même temps par l'ensemble des convertisseurs analogique-numériques CANᵢ et correspondant à des signaux reçus respectivement à un même instant t par les antennes de réception Anᵢ.

La mémoire de masse 110 comprend une borne d'entrée 128 raccordée à la borne de sortie 126 du multiplexeur, une borne de sortie 130 raccordée au premier émetteur 112, et une borne de commande de lecture/écriture 132.

La mémoire de masse 110 est apte à sauvegarder selon un ordre prédéterminé les données sérialisées à la sortie 126 par le multiplexeur 108.

Le premier émetteur 112 comprend une entrée 134 raccordée à la borne de sortie 130 de la mémoire de masse 110 et une borne de sortie 132 connectée à la première antenne de retransmission 48.

Le premier émetteur 112 est apte à retransmettre les données reçues en la première borne d'entrée 134 en fonction d'une commande d'activation fournie par un moyen, non représenté sur la figure 2, de détection de la visibilité de la première station de réception 14.

Le moyen de détection de la visibilité de la première station 14 est apte à détecter la visibilité de la première station 14 par exemple en comparant les éphémérides du satellite aux coordonnées de la première station 14.

Le moyen de commande 114 est connecté par une borne de sortie 138 à la borne de commande de lecture/écriture 132 de la mémoire de masse 110.

Le moyen de commande 114 est apte à déterminer l'état de collision de la salve dont la démodulation est recherchée parmi un état de présence de collision et un état d'absence de collision en fonction d'un signal représentatif de l'état de collision de la salve reçue en une entrée 140.

Ici l'entrée 140 est connectée à une sortie 142 du démodulateur 118 qui indique l'état de succès ou d'échec de la démodulation de la salve en cours de traitement.

Ainsi, la mémoire de masse 110 est apte à enregistrer de manière indépendante les signaux reçus numérisés des antennes Anᵢ, en vue d'une retransmission immédiate ou ultérieure par le premier émetteur 112 fonction de la visibilité de la première station 14, seulement lorsque l'état de collision fournie par la borne de sortie 138 du moyen de commande 114 indique une présence de collision de la salve.

Le deuxième émetteur 120 comprend une mémoire tampon, non représentée sur la Figure 2 et connectée au démodulateur 118, permettant d'enregistrer les messages des salves AIS, exemptes de collision et démodulées avec succès par le démodulateur 118, avant retransmission, et une entrée de commande 121.

Ici, le démodulateur 118 est également apte à extraire des informations utiles AIS de la trame de données démodulées en vue d'être traité rapidement au sol par les stations locales 18, 19 situées respectivement dans les zones locales 20, 21 lorsque l'une ou les stations locales sont visibles par le satellite. Les informations utiles AIS comprennent notamment la position du navire donnée par sa latitude et sa longitude.

Ici, le moyen d'identification 122 de zone locale est connecté en entrée à une sortie d'extraction 144 du démodulateur 118 et en sortie à une entrée 146 des moyens 124 de détection de visibilité et de déclenchement d'une retransmission.

Le moyen d'identification 122 est apte à fournir aux moyens de détection et de déclenchement 124 une identification d'une zone locale par exemple à partir des coordonnées d'un navire contenues dans les données extraites en sortie er 144 du démodulateur 118 à partir d'une salve AIS démodulée avec succès.

Le moyen d'identification 122 est apte à déterminer et à fournir aux moyens 124 de détection et de déclenchement une information d'identification de la station locale associée à la zone locale identifiée ou à défaut d'existence d'une telle station locale un drapeau d'indication d'absence de station locale.

Les moyens de détection et de déclenchement 124 sont raccordées en sortie à l'entrée de commande 121 du deuxième émetteur 120.

Les moyens 124 sont aptes à partir de l'information d'identification de la station locale à détecter la visibilité de la station locale par le satellite 4 et, lorsqu'une telle visibilité est détectée, à déclencher la retransmission vers la station locale associée à la salve dont les données utiles contiennent les coordonnées du navire émetteur situé dans zone locale contenant ladite station locale détectée visible.

Ainsi, un traitement en temps réel à bord du satellite de salves exemptes de collision et une retransmission immédiate des données démodulées correspondantes peuvent être effectuées vers des stations sol locales visibles par le satellite 4, ce qui permet un gain de temps d'accès par les stations locales aux informations AIS de navires appartenant à une même zone locale ou à des zones locales adjacentes. Le cas échéant, cela permet un gain de temps d'accès par les navires aux informations AIS.

Avantageusement, la limitation des sauvegardes de signaux AIS non démodulés sur chaque antenne Anᵢ par la mémoire de masse 110 aux seules salves AIS entachées d'erreur ou ayant une forte probabilité de l'être permet d'éviter la saturation de la mémoire de masse 110 et de l'utiliser de manière efficace.

Avantageusement, la démodulation à bord des salves exemptes de collision décharge le traitement au sol de tâches fastidieuses et simples, et diminue le temps de réacheminement des messages de données AIS.

En variante, les moyens de détection de visibilité des stations locales sont aptes à détecter au moins une station locale en comparant les éphémérides du satellite aux coordonnées de la ou des stations locales 18, 19.

En variante, un signal représentatif de l'état de collision est le degré de densités en les émetteurs AIS contenus dans la zone de visibilité 26 survolée par le satellite, l'état de collision de la salve indiquant une présence de collision lorsque le satellite survole une zone de couverture de réception prédéterminée qualifiée de dense.

En variante, la moyen de commande 114 active l'enregistrement en permanence des données de sortie des convertisseurs analogiques- numériques dans la mémoire de masse 110 en vue de les retransmettre en temps réel ou en temps différé vers la première station de réception 14, en fonction de la visibilité de la première station 14 par le satellite 4.

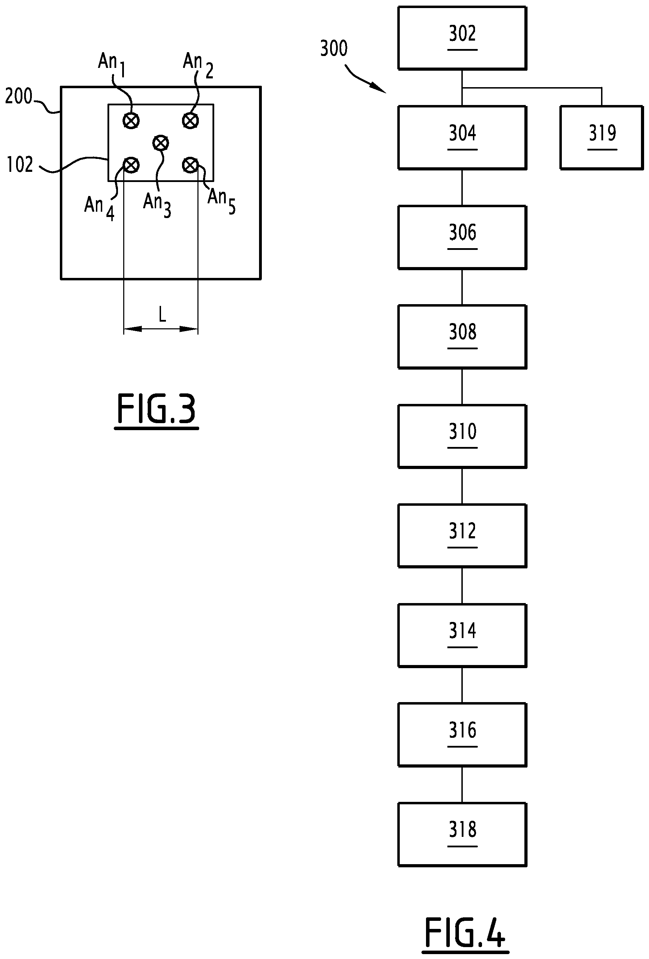

Suivant la Figure 3, le réseau d'antennes 102 comprend l'ensemble de cinq antennes An₁, An₂, An₃, An₄, An₅ de la Figure 2 disposées à plat sur une face 200 dite de Terre du satellite 4. La face 200 est dite de Terre en raison du fait qu'elle est tournée vers la Terre lorsque le satellite 4 survole la Terre.

Les éléments rayonnants constituant les antennes An₁, An₂, An₄, An₅ sont ici disposées aux quatre sommets d'un carré tandis que l'élément rayonnant constituant l'antenne An₃ est disposé au centre du carré.

La longueur du carré L est comprise entre 60 et 190 cm et de préférence égale à 92,5 cm, cette longueur correspondant à la demi-longueur d'onde du signal radioélectrique du système AIS.

Les éléments rayonnants sont ici de type patch mais peuvent également être à hélice.

En variante, le nombre d'éléments rayonnants est au moins égal à deux.

En variante, les éléments rayonnant sont disposés aux sommets et à l'intérieur d'un polygone.

Suivant la figure 4, un procédé 300, de mise en oeuvre du système de satellites décrit à la figure 1 et destiné à l'amélioration de la démodulation de salves entachées de collision, comprend une succession d'étapes.

Dans une première étape 302, un signal de salve AIS dont la démodulation est recherchée est reçu à un même instant t au niveau du réseau d'antennes 102 du satellite 4. Chaque antenne Anᵢ reçoit le signal et fournit en même temps un signal de sortie différent Oᵢ(t) fonction de la position respective de l'antenne Anᵢ dans le référentiel propre au satellite.

Dans une deuxième étape 304, chaque signal de sortie Oᵢ(t) de l'antenne associée Anᵢ est amplifié, transposé par exemple en bande de base par le récepteur associé RXᵢ et numérisé par le convertisseur analogique-numérique associé CANᵢ.

Dans une troisième étape 306, les signaux de sortie numérisés Sᵢ(t) sont sérialisés par le multiplexeur 108 et sauvegardés de manière indépendante dans la mémoire de masse 110.

Les signaux Sᵢ(t) ainsi sauvegardés ne sont pas combinés entre eux et permettent un traitement complexe au sol ultérieurement.

Puis dans une étape 308, lorsque le satellite 4 se trouve en visibilité de la station satellitaire 14, l'émetteur de retransmission retransmet les signaux Sᵢ(t) au sol.

Ensuite dans une étape 310, la station satellitaire reçoit les signaux Sᵢ(t) émis par le satellite, ces signaux Sᵢ(t) étant des signaux issus respectivement des antennes associés Anᵢ.

Dans une étape suivante 312, le centre de traitement 16 qui a reçu préalablement les signaux Sᵢ(t) détermine une suite de couples de coefficients (Aᵢ, ϕᵢ), chaque couple étant formé par un facteur d'amplitude Aᵢ et un déphasage ϕᵢ. La suite de coefficients (Aᵢ, ϕᵢ) correspond à un réseau de formation de faisceaux c'est-à-dire un diagramme d'antenne résultant de l'ensemble des antennes Anᵢ du satellite 4 et équivalent à celui d'une antenne active. La suite de coefficients (Aᵢ, ϕᵢ) est choisie de sorte à atténuer voire annuler la réception de salves, interférentes avec la salve en cours d'analyse et situées dans des zones prédéterminées selon des directions de réception prédéterminées, ou à accroître la directivité en direction de zones prédéterminées en provenance desquelles sont émises les salves dont la démodulation est recherchée,

Dans une étape 314, le centre de traitement affecte à chaque signal AIS reçu Sᵢ(t) d'une antenne de réception Anᵢ le couple (Aᵢ, ϕᵢ) de valeurs réelles associé, formé par un facteur d'amplitude Aᵢ et un déphasage ϕᵢ.

Dans une étape 316, le centre de traitement 16 combine les signaux Sᵢ(t) en les pondérant respectivement par les amplitudes Aᵢ et en les déphasant respectivement par les déphasages ϕᵢ pour former en un signal résultant R(t).

Dans une étape 318, le signal résultant R(t) associée à la salve dont la démodulation est recherchée est démodulé en données utiles AIS.

La démodulation d'une salve présentant une collision avec une ou d'autres salves est ainsi améliorée du fait que le rapport du signal utile de la salve sur l'énergie des différentes sources de brouillage a été augmenté. Le traitement différé permet un filtrage spatial sélectif des directions de réception des différents signaux émis en modifiant a posteriori et d'une manière équivalente ou virtuelle la directivité du réseau d'antennes 102.

En parallèle à l'exécution de l'étape 304, dans une étape 319 des salves AIS sont démodulées avec succès par au moins un démodulateur 118 à bord du satellite et retransmises immédiatement lorsqu'une station locale est visible par le satellite.

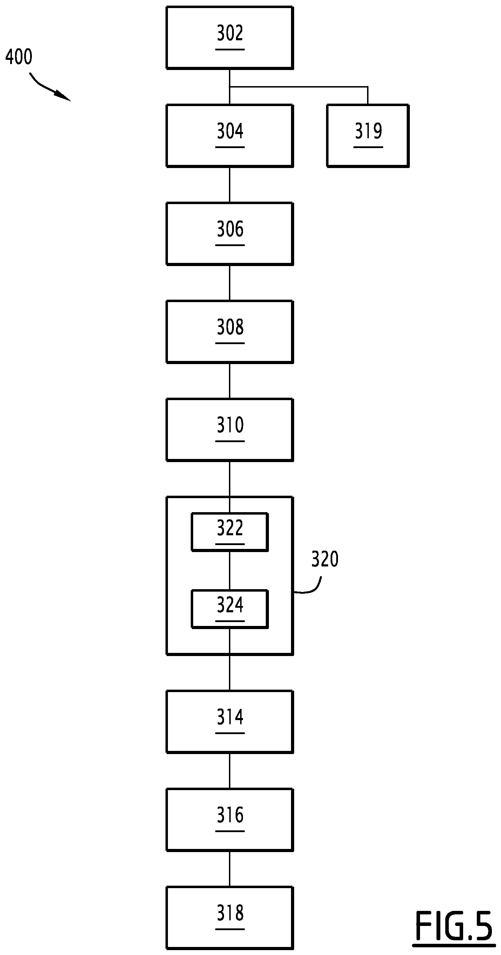

En variante, le procédé 400 de la figure 5 comporte des étapes identiques à celles de la figure 4 et désignés par les mêmes références.

L'étape 312 de la figure 4 est remplacée par une étape 320 qui comporte une étape 322 suivie d'une étape 324.

Dans l'étape 322, le centre de traitement 16 acquiert en la borne d'entrée 54 une information d'identification de la zone survolée par le satellite et un moment associé de réception t du signal AIS.

L'information d'identification de la zone survolée peut être déduite d'éphémérides du satellite 4 ayant reçu la salve et de l'instant de survol au moment de réception de la salve.

L'information d'identification de la zone survolée peut être fournie par le satellite lui-même.

La zone ainsi identifiée peut être associée par exemple à une ou des cartes de trafic paramétrées par un temps universel et établies au préalable à partir de données statistiques.

De manière plus grossière, la zone ainsi identifiée peut également être associée à une classification de zone, la plus simple étant la classification binaire en une zone dense et une zone peu dense en émetteurs AIS.

Dans l'étape 324, la suite de coefficients (Aᵢ, ϕᵢ) est déterminée en fonction de l'information d'identification de la zone survolée fournie en la borne 54 qui renvoie à la ou aux cartes de trafic. La suite de coefficients (Aᵢ, ϕᵢ) est déterminée de sorte à conformer le diagramme d'antenne équivalent à une ou des zones locales d'émetteurs AIS pour lesquels la démodulation des salves émises associées est recherchée. Le diagramme conformé prend en compte la carte ou les cartes de trafic en atténuant les zones où les densités d'émetteurs considérés comme des brouilleurs est la plus grande.

En variante, dans l'étape 306, seuls les signaux Si, correspondant à des salves entachées de collision ou ayant une probabilité de l'être supérieure à un seuil prédéterminée, sont sauvegardées dans la mémoire de masse 110.

Le seuil prédéterminé est égal à 0,7.

En variante, les étapes 312, 314, 316, 318 peuvent être répétées plusieurs fois avec des suites de coefficients (Aᵢ, ϕᵢ) différentes et les résultats obtenus fusionnés. Cela permet de focaliser efficacement le traitement sur des zones locales différentes de manière successive.

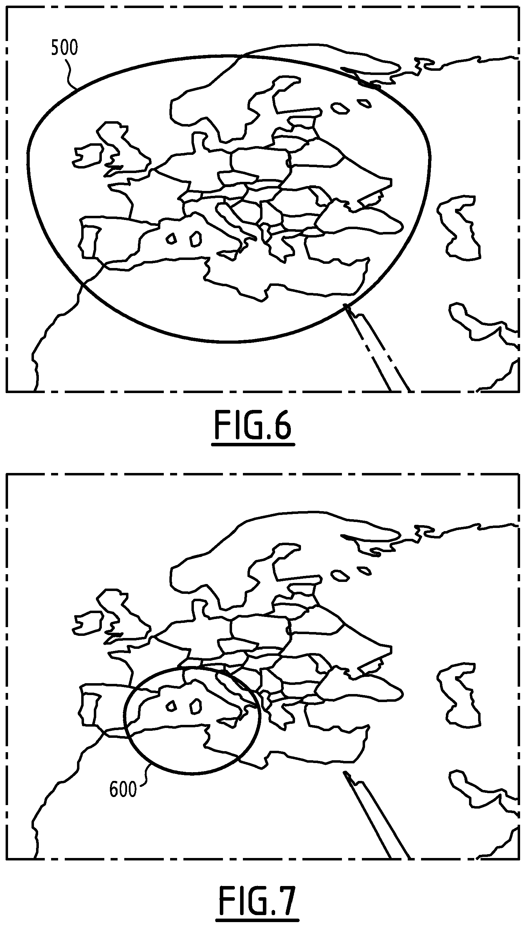

La Figure 6 représente un cas d"application du procédé de la figure 4 dans lequel le satellite survole la zone de l'Europe et de la mer Méditerranée.

Dans ce cas, les coefficients (1, 0), (1,0), (1, 0), (1,0), (1, 0) sont affectés respectivement aux antennes An₁, An₂, An₃, An₄ et An₅. Les signaux reçus par les antennes sont recombinés en phase avec la même amplitude.

Le diagramme de rayonnement équivalent 500 obtenu en traitement différé dans ce cas est intéressant car il permet une meilleure réception des signaux émis des navires situés à l'intérieur de la zone Europe-Méditerranée par rapport à un seul élément rayonnant Anᵢ en augmentant le rapport signal à bruit d'une salve reçue lorsque le bruit est un bruit de type thermique. Ce cas correspond à une réception à diversité d'antennes de réception. En revanche, un tel type de diagramme ne permet pas de s'affranchir de brouilleurs situés à l'intérieur de la zone de couverture.

La figure 7 représente dans un cas d'application du procédé de la figure 4 dans lequel le satellite survole la zone de l'Europe et de la mer Méditerranée et dans lequel on cherche à resserrer le diagramme de rayonnement 600 sur la mer Méditerranée occidentale. Dans ce cas, les coefficients (1, 0), (1, 0), (2, 180), (1,0), (1,0) sont affectés respectivement aux antennes An₁, An₂, An₃, An₄ et An₅. Le signal reçu par l'antenne central An₃ du réseau 102 est ainsi recombiné avec une amplitude double et en opposition de phase par rapport aux quatre autre signaux des quatre autres antennes qui sont recombinés en phase et avec une amplitude unitaire.

Ce diagramme de traitement a postériori permet de resserrer le diagramme du réseau 102 sur les navires situés en Méditerranée en augmentant le niveau de signal reçu et d'atténuer le niveau des signaux émis par des brouilleurs situés en dehors de la zone de couverture de Méditerranée occidentale.

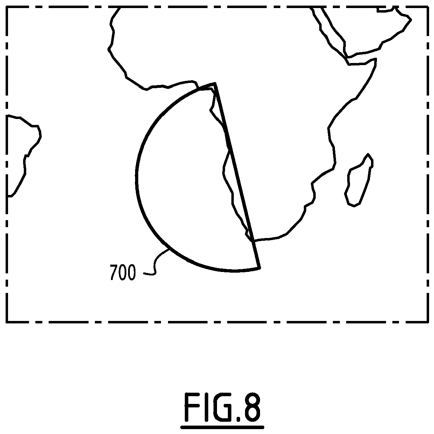

La Figure 8 représente le cas où le satellite survole l'Afrique australe.

Dans ce cas, les coefficients (1, 90), (0,0), (1, 0), (0,0), (1, -90) sont affectés respectivement aux antennes An₁, An₂, An₃, An₄ et An₅.

Le signal de l'antenne centrale An3 est recombiné avec une amplitude unitaire et un déphasage nul par rapport à une référence de phase aux signaux reçus par les antennes An₁ et An₅ situés sur une diagonale du réseau 102. Le signal de l'antenne An1, respectivement le signal de l'antenne An5 est recombiné unitairement en avance, respectivement en retard de quadrature.

Cette combinaison permet de faire pencher le diagramme de rayonnement sur un coté et de resserrer le diagramme 700 sur un côté ici la portion maritime situé au large de la côte occidentale de l'Afrique australe.

Etant donné qu'il n'y a que des terres dans une moitié de champ de vue situé à l'Est, il est intéressant d'utiliser ce diagramme en forme de demi-lune pour filtrer le bruit d'origine industriel émis sur les terres et superposé aux signaux utiles des salves AIS émise depuis les navires.

Avantageusement, la formation des diagrammes étant faite a posteriori en traitement différé au sol, il est possible de former pour une zone donnée plusieurs digrammes différents, de les traiter puis de fusionner les informations obtenues afin de traiter une zone plus grande. Cette technique appelée formation de faisceaux au sol est appliquée ici à la réduction des collisions de salves AIS reçues à bord de satellites.

Par exemple, sur la base d'une combinaison de celle décrite à la figure 8, il est possible de traiter d'abord les signaux sur un couverture demi-lune située à gauche, puis ensuite des les traiter sur une couverture demi-lune située à droite de la couverture demi-lune gauche représentée sur la Figure 7. Ainsi, les salves AIS peuvent être démodulées sur l'ensemble de la couverture en tant que fusion des deux couvertures demi-lune gauche et droite avec une amélioration de la réception des signaux de salve reçus.

En outre, déporter le traitement des salves entachées de collision au sol permet d'utiliser des algorithmes puissants de traitement du signal mais également de simplifier la complexité du satellite, et par conséquent sa consommation et son poids.

## Revendications

1. Charge utile d'un satellite (4) destinée à la surveillance de trajectoires maritimes de navires, et apte à recevoir des signaux AIS, propres à un système maritime au sol AIS, et émis sous forme de salves à partir de navires (8, 10, 12) sur la mer, chaque salve reçue présentant une présence ou une absence de collision, la charge utile comprenant une première chaîne de transmission (100) ayant :
au moins deux antennes de réception (An₁, An₂, An₃, An₄, An₅) accordées à une même bande VHF de réception prédéterminée, séparées entre elles et disposées selon une configuration géométrique prédéterminée par rapport à un référentiel propre au satellite (4), chacune (An₁, An₂, An₃, An₄, An₅) étant apte à fournir en même temps un signal de sortie (O₁(t), O₂(t), O₃(t) O₄(t), O₅(t)) différent en fonction de sa position respective dans le référentiel propre du satellite (4) et correspondant à une même salve reçue dont la démodulation est recherchée,
au moins deux récepteurs (RX₁, RX₂, RX₃, RX₄, RX₅) et au moins deux convertisseurs analogiques/numériques (CAN₁, CAN₂, CAN₃, CAN₄, CAN₅), chaque récepteur (RX₁, RX₂, RX₃, RX₄, RX₅) étant dépourvu d'un démodulateur de signaux AIS en données utiles et étant raccordé respectivement, en amont, à une antenne propre associée (An₁, An₂, An₃, An₄, An₅) et, en aval, à un convertisseur analogique/numérique propre associé (CAN₁, CAN₂, CAN₃, CAN₄, CAN₅),
une mémoire de masse (110) apte à sauvegarder de manière indépendante chacun des signaux de sortie AIS reçus en même temps par les antennes de réception et numérisés respectivement par les convertisseurs analogiques/numériques (S₁(t), S₂(t), S₃(t), S₄(t), S₅(t)), et
un premier émetteur (112) apte à retransmettre sur une première liaison radioélectrique (52) vers le sol les signaux numérisés et sauvegardés de manière indépendante (S₁(t), S₂(t), S₃(t), S₄(t), S₅(t)) dans la mémoire de masse (110) en vue d'un traitement complexe au sol,
**caractérisée en ce qu'**elle comprend une deuxième chaîne de transmission (116) apte à démoduler (118) chaque salve reçue en des données utiles de surveillance, la deuxième chaine de transmission comportant une deuxième émetteur (120) apte à retransmettre sur une deuxième liaison radioélectrique (53) lesdites données utiles vers le sol ;
en ce la deuxième chaîne de transmission (116) est apte à démoduler les salves reçues exemptes de collision et à les retransmettre ensuite immédiatement ver le sol ; et
**en ce que** la mémoire de masse (110) est apte à sauvegarder de manière indépendante chacun des signaux de sortie AIS reçus en même temps par les antennes de réception et numérisés (S₁(t), S₂(t), S₃(t), S₄(t), S₅(t)) respectivement par les convertisseurs analogiques/numériques (CAN₁, CAN₂, CAN₃, CAN₄, CAN₅), seulement lorsque la salve dont la démodulation est recherchée présente une collision c'est-à-dire est entachée ou présente une probabilité supérieure à un seuil prédéterminé d'être entachée d'une collision avec une autre salve.

2. Charge utile selon la revendication 1, **caractérisée en ce que** la deuxième chaîne de transmission (116) est apte à retransmettre immédiatement les salves démodulés exemptes de collision à des stations locales (18; 19) lorsqu'un moins une station locale (18; 19) est visible depuis le satellite (4).

3. Charge utile selon l'une quelconque des revendications 1 à 2 **caractérisée en ce que** la deuxième chaine de transmission (116) est apte à extraire pour une salve donnée démodulée avec succès, une information de localisation du navire (8, 10 ; 12) émetteur de la salve démodulée, à déterminer une station locale (18; 19) de rattachement du navire émetteur (8, 10; 12) et à retransmettre immédiatement à la station locale (18; 19) la salve démodulée lorsque la station locale (18; 19) est visible depuis le satellite.

4. Charge utile selon l'une quelconque des revendications 1 à 3 **caractérisée en ce que** la deuxième chaine de transmission (116) est apte à traiter un signal de sortie d'une antenne de réception(An₂) et comprenant au moins un démodulateur (118) et un deuxième émetteur (50).

5. Charge utile selon l'une quelconque des revendications 1 à 4, **caractérisée en ce que** qu'elle est dépourvue d'une unité de traitement par combinaison linéaire pondérés et/ou déphasés des signaux de sortie reçus en même temps.

6. Charge utile selon l'une quelconque des revendications 1 à 5, **caractérisée en ce que** les antennes (An₁, An₂, An₃, An₄, An₅) sont du type patch ou à hélice.

7. Charge utile selon l'une quelconque des revendications 1 à 6, **caractérisée en ce qu'**elle comprend cinq antennes (An₁, An₂, An₃, An₄, An₅).

8. Charge utile selon la revendication 7, **caractérisé en ce que** les antennes (An₁, An₂, An₃, An₄, An₅) sont disposées aux quatre sommets d'un carré et en son centre, la longueur du carré (L) étant comprise entre 60 et 190 cm.

9. Charge utile selon l'une quelconque des revendications 1 à 8, **caractérisée en ce que** le seuil prédéterminé est supérieur ou égal à 0,7.

10. Charge utile selon l'une quelconque des revendications 1 à 9, **caractérisé en ce qu'**elle comprend un moyen de commande (114) de la mémoire de masse (110) et de détermination de l'état de collision de la salve ayant une borne d'entrée (136) et une borne de sortie (138) connectée à la mémoire de masse (110),
la borne d'entrée (136) étant apte à recevoir un signal représentatif de l'état de collision de la salve dont la démodulation est recherchée,
la borne de sortie (138) étant apte à fournir un signal indiquant l'état de collision de la salve parmi une présence ou une absence de collision dépendant du signal d'entrée, et
la mémoire de masse (110) est apte à enregistrer de manière indépendante les signaux reçus numérisés (S₁(t), S₂(t), S₃(t), S₄(t), S₅(t)), en vue d'une retransmission immédiate ou ultérieure, lorsque l'état de collision fournie par la borne de sortie indique une présence de collision.

11. Charge utile selon la revendication 7, **caractérisée en ce que** le signal représentatif de l'état de collision est le degré de densités en émetteurs AIS contenus dans la zone de visibilité (26) survolée par le satellite (4), et en ce l'état de collision de la salve indique une présence de collision lorsque le satellite (4) survole une zone de couverture (26) de réception prédéterminée qualifiée de dense.

12. Charge utile selon la revendication 10, **caractérisée en ce que** la deuxième chaine de transmission (116) est apte à fournir au moyen (114) de commande un signal représentatif de l'état de collision de la salve reçue parmi un état exempt de collision et un état avec collision.

13. Charge utile selon l'une quelconque revendication 1 à 12, **caractérisée en ce qu'**elle comprend un moyen de commande (114) de retransmission comportant une borne de sortie apte à fournir un signal d'activation de la retransmission.

14. Charge utile selon l'une quelconque des revendications 1 à 8, **caractérisée en ce que** la mémoire de masse (110) est apte à sauvegarder en permanence de manière indépendante chacun des signaux de sortie AIS reçus en même temps par les antennes de réception et numérisés (S₁(t), S₂(t), S₃(t), S₄(t), S₅(t)) respectivement par les convertisseurs analogiques/numériques (CAN₁, CAN₂, CAN₃, CAN₄, CAN₅) et la première chaine est apte à retransmettre tous les signaux sauvegardés correspondant à toutes les salves reçues y compris les salves correspondant aux salves démodulées avec succès par la deuxième chaine.

15. Système de satellites intégré dans un système de navigation maritime au sol de type AIS destiné à la surveillance de trajectoires maritimes de navires comprenant :
une constellation de satellites (4) défilants, chaque satellite (4) comportant une charge utile (42) conforme à l'une des revendications 1 à 11,
au moins un centre de traitement au sol (14) apte à recevoir les signaux sauvegardés de manière indépendante Sᵢ(t) dans la mémoire de masse (110) d'un satellite (4) correspondant aux signaux d'une même salve reçus en même temps et associés respectivement à des antennes de réception différentes (Anᵢ) d'indices i, à affecter à chaque signal AIS reçu Sᵢ(t) d'une antenne de réception d'indice i un couple (Aᵢ, ϕᵢ) de valeurs réelles associé, formé par un facteur d'amplitude Aᵢ et un déphasage ϕᵢ, et à combiner les signaux Sᵢ(t) pondérés respectivement par les amplitudes Aᵢ et déphasés respectivement par les déphasages ϕᵢ pour former en un signal résultant R(t),
au moins une deuxième station satellitaire locale (18, 19) de surveillance apte à recevoir le salves démodulées à bord des satellites (4) et retransmises immédiatement.

16. Système selon la revendication 15, **caractérisé en ce que** le centre de traitement au sol (16) comprend une entrée (54) apte à recevoir une information d'identification de zone (26) survolée par le satellite (4) associée au moment (t) de réception du signal AIS.

17. Procédé de traitement mis en oeuvre dans un système de satellites défini selon la revendication 15, comprenant les étapes consistant à :
recevoir (310) au sol sur une première liaison radioélectrique (52) des signaux Sᵢ(t) issus en même temps respectivement des antennes associés (Anᵢ) d'un satellite (4),
déterminer (312) une suite de coefficients (Aᵢ, ϕᵢ) correspondant à un réseau de formation de faisceaux à traitement différé d'un diagramme d'antenne résultant de l'ensemble des antennes (Anᵢ) du satellite (4) permettant soit d'annuler la réception de salves interférentes situés dans des zones prédéterminées, soit d'accroitre la directivité en direction de zones en provenance desquelles sont les émises les salves dont la démodulation est recherchée,
affecter (314) à chaque signal AIS reçu Sᵢ(t) d'une antenne de réception d'indice i le couple (Aᵢ, ϕᵢ) de valeurs réelles associé, formé par une amplitude Aᵢ et un déphasage ϕᵢ, et
combiner (316) les signaux Sᵢ(t) pondérés respectivement par les amplitudes Aᵢ et déphasés respectivement par les déphasages ϕᵢ pour former un signal résultant R(t).
recevoir sur une deuxième liaison radioélectrique (53) des salves AIS démodulées avec succès à bord d'un satellite et retransmises immédiatement lorsqu'une station locale est visible par le satellite.

18. Procédé selon la revendication 17, **caractérisé en ce qu'**il comprend les étapes consistant à
acquérir (322) par le centre de traitement (16) une information d'identification de zone (26) survolée par le satellite (4) associée au moment de réception (t) des signaux AIS (Sᵢ(t)),
déterminer (324) la suite de coefficients (Aᵢ, ϕᵢ) correspondant à un réseau de formation de faisceaux à traitement différé d'un diagramme d'antenne équivalent résultant de l'ensemble des antennes du satellite en fonction de l'information d'identification de la zone survolée par le satellite (4).

19. Procédé selon la revendication 17, **caractérisé en ce qu'**il comprend l'étape consistant à
affecter la suite de coefficients (1, 0) à chaque signal reçu Si(t).

20. Procédé selon la revendication selon l'une quelconque des revendications 17 à 19, **caractérisé en ce qu'**il comprend les étapes consistant à
acquérir par la station satellitaire une information d'identification de zone survolée par le satellite associé au moment de réception des signaux AIS (Si(t)),
affecter la suite de coefficients (1, 0) à chaque signal reçu Si(t) lorsque la zone survolée est une zone peu dense.

21. Procédé de traitement selon la revendication 17, **caractérisé en ce qu'**il comprend les étapes consistant à :
émettre par le satellite tous les signaux numérisés (Sᵢ(t) lorsque le satellite survole une zone dense,
émettre par le satellite les signaux numérisés (Sᵢ(t)) d'une salve détectée entachée de collision lorsque les satellite survole une zone peu dense,
acquérir par le centre de traitement (16) au sol une information d'identification de zone (26) survolée par le satellite associé au moment de réception des signaux AIS (Si(t)),
recevoir au sol les signaux Sᵢ(t) issus respectivement des antennes associés Anᵢ lorsqu'ils sont émis par le satellite (4),
déterminer une suite de coefficients (Aᵢ, ϕᵢ) correspondant à un réseau de formation de faisceaux à traitement différé d'un diagramme d'antenne résultant de l'ensemble des antennes du satellite en fonction de une information d'identification de zone, lorsque la zone survolée est une zone dense,
affecter la suite de coefficients (1, 0) à chaque signal reçu Si(t) lorsque la zone survolée est une zone peu dense,
affecter à chaque signal AIS reçu Sᵢ(t) d'une antenne de réception d'indice i le couple (Ai, ϕi) de valeurs réelles associé déterminé lorsque la zone survolée est dense, et
combiner les signaux Si(t) pondérés respectivement par les amplitudes Ai et déphasés respectivement par les déphasages ϕi pour former un signal résultant R(t).

## Patentansprüche

1. Nutzlast eines Satelliten (4), vorgesehen zur Überwachung von maritimen Bahnen von Schiffen und geeignet zum Empfangen von AIS-Signalen, die zu einem maritimen Boden-AIS-System gehören und in Form von Signalstößen ausgehend von Schiffen (8, 10, 12) auf dem Meer gesendet werden, wobei jeder empfangene Signalstoß eine Kollisions-Präsenz oder -Absenz aufweist, wobei die Nutzlast eine erste Übertragungskette (100) aufweist, aufweisend:
Mindestens zwei Empfangsantennen (An₁, An₂, An₃, An₄, An₅), die auf dasselbe vorgegebene VHF-Empfangsband eingestellt sind, die voneinander getrennt sind und gemäß einer vorgegebenen geometrischen Konfiguration bezüglich eines zu dem Satelliten (4) gehörenden Bezugssystems angeordnet sind, wobei jede (An₁, An₂, An₃, An₄, An₅) geeignet ist, gleichzeitig ein anderes Ausgangssignal (O₁(t), O₂(t), O₃(t) O₄(t), O₅(t)) in Abhängigkeit seiner jeweiligen Position in dem Bezugssystem (4) des Satelliten bereitzustellen, das zu dem gleichen empfangenen Signalstoß gehört, dessen Demodulation gesucht wird,
mindestens zwei Empfänger (RX₁, RX₂, RX₃, RX₄, RX₅) und mindestens zwei Analog/DigitalWandler (CAN₁, CAN₂, CAN₃, CAN₄, CAN₅), wobei jeder Empfänger (RX₁, RX₂, RX₃, RX₄, RX₅) frei von einem Demodulator von AIS-Signalen in Nutzdaten ist und jeweils eingangsseitig mit einer eigenen zugehörigen Antenne (An₁, An₂, An₃, An₄, An₅) verbunden ist und ausgangsseitig mit einem eigenen zugehörigen Analog/Digital-Wandler (CAN₁, CAN₂, CAN₃, CAN₄, CAN₅) verbunden ist,
einen Massenspeicher (110), geeignet zum Speichern, auf unabhängige Weise, jedes der gleichzeitig durch die Empfangsantennen empfangenen und durch die Analog/Digital-Wandler digitalisierten Ausgangs-AIS-Signale (S1(t), S2(t), S3(t), S4(t), S₅(t)) und
einen ersten Sender (112), geeignet zum Senden über eine erste funkelektrische Verbindung (52) der digitalisierten und auf unabhängige Weise in dem Massenspeicher (110) gespeicherten Signale (S1(t), S2(t), S3(t), S4(t), S5(t)) Richtung Boden in Hinblick auf eine komplexe Verarbeitung am Boden,
dadurch charakterisiert, dass sie eine zweite Übertragungskette (116) aufweist, die dazu geeignet ist, jeden empfangenen Signalstoß in Überwachungs-Nutzdaten zu demodulieren (118), wobei die zweite Übertragungskette einen zweiten Sender (120) aufweist, der dazu geeignet ist, die Nutzdaten auf einer zweiten funkelektrischen Verbindung (53) Richtung Boden zu senden;
dadurch, dass die zweite Übertragungskette (116) geeignet ist, die empfangenen Signalstöße frei von Kollision zu demodulieren und anschließend sofort Richtung Boden zu senden; und
dadurch, dass der Massenspeicher (110) geeignet ist, auf unabhängige Weise jedes der gleichzeitig durch die Empfangsantennen empfangenen und jeweils durch die Analog/DigitalWandler (CAN₁, CAN₂, CAN₃, CAN₄, CAN₅) digitalisierten Ausgangs-AIS-Signale (S1(t), S2(t), S3(t), S4(t), S5(t)) zu speichern nur, wenn der Signalstoß, dessen Demodulation gesucht ist, eine Kollision aufweist, d.h. mit einer Kollision mit einem anderem Signalstoß behaftet ist oder mit einer Wahrscheinlichkeit, die über einer vorgegebenen Schwelle liegt, mit einer Kollision mit einem anderem Signalstoß behaftet ist.

2. Nutzlast gemäß Anspruch 1, dadurch charakterisiert, dass die zweite Übertragungskette (116) eingerichtet ist, sofort die demodulierten Signalstöße frei von Kollision an lokale Stationen (18; 19) zu übertragen, wenn mindestens eine lokale Station (18; 19) vom Satelliten aus (4) sichtbar ist.

3. Nutzlast gemäß einem der Ansprüche 1 bis 2, dadurch charakterisiert, dass die zweite Übetragungskette (116) geeignet ist, für einen gegebenen mit Erfolg demodulierten Signalstoß eine Lokalisierungsinformation des Schiffs (8, 10; 12), das den demodulierten Signalstoß gesendet hat, zu extrahieren, eine lokale Station (18; 19) zum Angliedern des sendenden Schiffs (8, 10; 12) zu ermitteln und sofort den demodulierten Signalstoß an die lokale Station (18; 19) zu senden, wenn die lokale Station (18; 19) vom Satelliten aus sichtbar ist.

4. Nutzlast gemäß einem der Ansprüche 1 bis 3, dadurch charakterisiert, dass die zweite Übertragungskette (116) geeignet ist, ein Ausgangssignal einer Empfangsantenne (An₂) zu verarbeiten und mindestens einen Demodulator (118) und einen zweiten Sender (50) aufweist.

5. Nutzlast gemäß einem der Ansprüche 1 bis 4, dadurch charakterisiert, dass sie frei ist von einer Einheit zum Verarbeiten durch lineare Kombination der gewichteten und/oder phasenverschobenen gleichzeitig empfangenen Ausgangssignale.

6. Nutzlast gemäß einem der Ansprüche 1 bis 5, dadurch charakterisiert, dass die Antennen (An₁, An₂, An₃, An₄, An₅) vom Patch-Typ oder Wendel-Typ sind.

7. Nutzlast gemäß einem der Ansprüche 1 bis 6, dadurch charakterisiert, dass sie fünf Antennen (An₁, An₂, An₃, An₄, An₅) aufweist.

8. Nutzlast gemäß Anspruch 7, dadurch charakterisiert, dass die Antennen (An₁, An₂, An₃, An₄, An₅) an den vier Ecken eines Quadrats und in seinem Zentrum angeordnet sind, wobei die Länge des Qudrats (L) zwischen 60 und 190 cm liegt.

9. Nutzlast gemäß einem der Ansprüche 1 bis 8, dadurch charakterisiert, dass die vorgegebene Schwelle größer oder gleich 0,7 ist.

10. Nutzlast gemäß einem der Ansprüche 1 bis 9, dadurch charakterisiert, dass sie ein Mittel (114) zum Steuern des Massenspeichers (110) und zum Ermitteln des Kollisionszustands des Signalstoßes mit einem Eingangsanschluss (136) und einem Ausgangsanschluss (138), verbunden mit dem Massenspeicher (110), aufweist, wobei
der Eingangsanschluss (136) geeignet ist, ein Signal zu empfangen, das für den Kollisionszustand des Signalstoßes, dessen Demodulation gesucht ist, repräsentativ ist,
der Ausgangsanschluss (138) geeignet ist, ein Signal bereitzustellen, das den Kollisionszustand des Signalstoßes als Kollisions-Präsenz oder -Absenz abhängig von Eingangssignal angibt und
der Massenspeicher (110) geeignet ist, auf unabhängige Weise die digitalisierten empfangenen Signale (S1(t), S2(t), S3(t), S4(t), S5(t)) in Hinblick auf eine sofortige oder spätere Übertragung zu speichern, wenn der von dem Ausgangsanschluss bereitgestellte Kollisionszustand eine Kollisionspräsenz angibt.

11. Nutzlast gemäß Anspruch 7, dadurch charakterisiert, dass das Signal, das für den Kollisionszustand repräsentativ ist, der Grad von Dichten von AIS-Sendern, die in der sichtbaren Zone (26), die von dem Satelliten (4) überflogen wird, ist, und dadurch, dass der Kollisionszustand des Stoßsignals eine Kollisionspräsenz anzeigt, wenn der Satellit (4) einen vorgegebenen Empfangs-Abdeckungsbereich (26) überfliegt, der als dicht qualifiziert ist.

12. Nutzlast gemäß Anspruch 10, dadurch charakterisiert, dass die zweite Übertragungskette (116) geeignet ist, an das Mittel (114) zum Steuern ein Signal bereitzustellen, das für den Kollisionszustand des empfangenen Signalstoßes unter einem Zustand frei von Kollision und einem Zustand mit Kollision repräsentativ ist.

13. Nutzlast gemäß einem der Ansprüche 1 bis 12, dadurch charakterisiert, dass sie ein Mittel (114) zum Steuern einer Übertragung aufweist, das einen Ausgangsanschluss aufweist, der geeignet ist, ein Signal zum Aktivieren der Übertragung bereitzustellen.

14. Nutzlast gemäß einem der Ansprüche 1 bis 8, dadurch charakterisiert, dass der Massenspeicher (110) geeignet ist, permanent auf unabhängige Weise jedes der gleichzeitig durch die Empfangsantennen empfangenen und durch die Analog/Digital-Wandler (CAN₁, CAN₂, CAN₃, CAN₄, CAN₅) jeweils digitalisierten AIS-Ausgangssignale (S1(t), S2(t), S3(t), S4(t), S5(t)) zu speichern und die erste Kette geeignet ist, alle die gespeicherten Signale entsprechend allen empfangenen Signalstößen inklusive der Signalstöße, die zu den mit Erfolg durch die zweite Kette demodulierten Signalstößen gehören, zu übertragen.

15. Satellitensystem, integriert in ein System zur maritimen Navigation am Boden vom Typ AIS, vorgesehen zur Überwachung von maritimen Bahnen von Schiffen, aufweisend:
Eine Konstellation von vorbeiziehenden Satelliten (4), wobei jeder Satellit (4) eine Nutzlast (42) gemäß einem der Ansprüche 1 bis 11 aufweist,
mindestens ein Verarbeitungszentrum am Boden (14), eingerichtet zum Empfangen der auf unabhängige Weise in dem Massenspeicher (11) eines Satelliten (4) gespeicherten Signale Sᵢ(t) entsprechend den Signalen ein und desselben Signalstoßes, die gleichzeitig empfangen wurden und jeweils mit unterschiedlichen Empfangsantennen (Anᵢ) mit Indizes i gehören, zum Zuweisen zu jedem empfangenen AIS-Signal Sᵢ(t) einer Empfangsantenne mit dem Index i eines Paars (Aᵢ, ϕᵢ) mit assoziierten reellen Werten, gebildet durch einen Amplitudenfaktor Aᵢ und eine Phasenverschiebung ϕᵢ, und zum Kombinieren der Signale Sᵢ(t), jeweils gewichtet durch die Amplituden Aᵢ und jeweils phasenverschoben durch die Phasenverschiebungen ϕᵢ, zum Bilden eines Ergebnissignals R(t),
mindestens eine zweite lokale Satellitenstation (18, 19) zum Überwachen, geeignet zum Empfangen der an Bord der Satelliten (4) demodulierten und sofort übertragenen Signale.

16. System gemäß Anspruch 15, dadurch charakterisiert, dass das Verarbeitungszentrum am Boden (16) einen Eingang (54) aufweist, der geeignet ist, eine Identifikation des von dem Satelliten (4) überflogenen Gebiets assoziiert mit dem Zeitpunk (t) des Empfangs des AIS-Signals zu empfangen.

17. Verfahren zum Durchführen in einem Satellitensystem, definiert gemäß Anspruch 15, aufweisend die Schritte bestehend aus:
Empfangen (310) am Boden über eine erste funkelektrische Verbindung (52) von Signalen Sᵢ(t), zur gleichen Zeit hervorgegangen jeweils von zugehörigen Antennen (Anᵢ) eines Satelliten (4),
Ermitteln (312) einer Folge von Koeffizienten (Aᵢ, ϕᵢ) entsprechend einer Antennenanordnung zur Bündelformung mit zeitlich versetzter Verarbeitung einer Strahlungscharakteristik, die aus der Menge von Antennen (Anᵢ) des Satelliten (4) hervorgeht, die es entweder ermöglicht, den Empfang von interferierenden Signalstößen, die sich in vorgegebenen Gebieten befinden, zu annullieren, oder die Direktivität in Richtung von Zonen, aus denen die Signalstöße emittiert wurden, deren Demodulation gesucht ist, zu erhöhen,
Zuweisen (314) zu jedem empfangenen AIS-Signal Sᵢ(t) einer Empfangsantenne mit Index i des Paars (Aᵢ, ϕᵢ) mit reellen assoziierten Werten, gebildet durch eine Amplitude Aᵢ und eine Phasenverschiebung ϕᵢ und
Kombinieren (316) der Signale Sᵢ(t), jeweils gewichtet durch die Amplituden Aᵢ und jeweils phasenverschoben durch die Phasenverschiebungen ϕᵢ zum Bilden eines Ergebnissignals R(t),
Empfangen auf einer zweiten funkelektrischen Verbindung (53) der an Bord der Satelliten (4) mit Erfolg demodulierten und sofort, wenn eine lokale Station für den Satelliten sichtbar ist, übertragenen AIS-Signalstöße.

18. Verfahren gemäß Anspruch 17, dadurch charakterisiert, dass sie die Schritte aufweist bestehend aus:
Beschaffen (322) durch das Verarbeitungszentrum (16) einer Identifikation des von dem Satelliten (4) überflogenen Gebiets, assoziiert mit dem Zeitpunk (t) des Empfangs des AIS-Signals (Sᵢ(t)),
Ermitteln (324) der Folge von Koeffizienten (Aᵢ, ϕᵢ) entsprechend einer Antennenanordnung zur Bündelformung mit zeitlich versetzter Verarbeitung einer äquivalenten Strahlungscharakteristik, die aus der Menge von Antennen des Satelliten hervorgeht, in Abhängigkeit der Identifikationsinformation des von dem Satelliten (4) überflogenen Gebiets.

19. Verfahren gemäß Anspruch 17, dadurch charakterisiert, dass sie den Schritt aufweist bestehend aus
Zuweisen der Folge von Koeffizienten (1, 0) an jedes empfangenes Signal Si(t).

20. Verfahren gemäß einem der Ansprüche 17 bis 19, dadurch charakterisiert, dass sie die Schritte aufweist bestehend aus
Beschaffen durch die Satellitenstation einer Information zum Identifizieren des von dem zugehörigen Satelliten zum Zeitpunkt des Empfangs der AIS-Signale (Si(t)) überflogenen Gebiets,
Zuweisen der Folge von Koeffizienten (1, 0) zu jedem empfangenen Signal Si(t), wenn das überflogene Gebiet ein wenig dichtes Gebiet ist.

21. Verfahren zum Verarbeiten gemäß Anspruch 17, dadurch charakterisiert, dass es die Schritte aufweist bestehend aus:
Aussenden durch den Satelliten aller digitalisierten Signale (Sᵢ(t)), wenn der Satellit ein dichtes Gebiet überfliegt,
Aussenden durch den Satelliten der digitalisierten Signale (Sᵢ(t)) eines Signalstoßes, der als mit Kollision behaftet detektiert wurde, wenn der Satellit ein wenig dichtes Gebiet überfliegt,
Beschaffen durch das Verarbeitungszentrum (16) am Boden einer Information zur Identifikation des von dem zugehörigen Satelliten zum Zeitpunkt des Empfangs der AIS-Signale (Sᵢ(t)) überflogenen Gebiets,
Empfangen am Boden der aus den zugehörigen Antennen Anᵢ jeweils hervorgegangenen Signalen Sᵢ(t), wenn sie von dem Satelliten (4) ausgesendet werden,
Ermitteln einer Folge von Koeffizienten (Aᵢ, ϕᵢ) entsprechend einer Antennenanordnung zur Bündelformung mit zeitlich versetzter Verarbeitung einer Strahlungscharakteristik, die aus der Menge von Antennen des Satelliten hervorgeht, in Abhängigkeit der Identifikationsinformation des Gebiets, wenn das überflogene Gebiet ein dichtes Gebiet ist,
Zuweisen der Folge von Koeffizienten (1, 0) zu jedem empfangenen Signal Si(t), wenn das überflogene Gebiet ein wenig dichtes Gebiet ist,
Zuweisen zu jedem von einer Empfangsantenne mit Index i empfangenen AIS-Signal Sᵢ(t) des Paars (Aᵢ, ϕᵢ) mit assoziierten reellen Werten, wenn das überflogene Gebiet dicht ist und
Kombinieren der Signale Sᵢ(t), jeweils gewichtet durch die Amplituden Aᵢ und jeweils phasenverschoben durch die Phasenverschiebungen ϕᵢ, zum Bilden eines Ergebnissignals R(t).

## Claims

1. Payload of a satellite (4) intended for monitoring maritime trajectories of ships, and capable of receiving AIS signals, suitable for a ground-based AIS system, and transmitted in the form of bursts from ships (8, 10, 12) at sea, each burst received having a presence or absence of collision, the payload comprising a first transmission chain (100) having:
at least two reception antennas (An₁, An₂, An₃, An₄, An₅) tuned to the same predetermined VHF reception band, separated from each other and disposed according to a predetermined geometric configuration with respect to a frame of reference specific to the satellite (4), each (An₁, An₂, An₃, An₄, An₅) being capable of furnishing at the same time a different output signal (O₁(t), O₂(t), O₃(t) O₄(t), O₅(t)) as a function of its respective position in the frame of reference specific to the satellite (4) and corresponding to the same burst received for which the demodulation is sought,
at least two receivers (RX₁, RX₂, RX₃, RX₄, RX₅) and at least two analogue/digital converters (CAN₁, CAN₂, CAN₃, CAN₄, CAN₅), each receiver (RX₁, RX₂, RX₃, RX₄, RX₅) not having a useful data AIS signal demodulator and being connected respectively upstream to a specific associated antenna (An₁, An₂, An₃, An₄, An₅) and downstream to a specific associated analogue/digital converter (CAN₁, CAN₂, CAN₃, CAN₄, CAN₅),
a mass storage device (110) capable of independently saving each of the AIS output signals received at the same time by the receiving antennas and digitised respectively by the analogue/digital converters (S₁(t), S₂(t), S₃(t), S₄(t), S₅(t)), and
a first transmitter (112) capable of retransmitting, on a first radio link (52) to the ground, the signals that were digitised and saved independently (S₁(t), S₂(t), S₃(t), S₄(t), S₅(t)) in the mass storage device (110) for the purpose of complex processing on the ground,
**characterised in that** it comprises a second transmission chain (116) capable of demodulating (118) each burst received of useful monitoring data, the second transmission chain comprising a second transmitter (120) capable of retransmitting said useful data on a second radio link (53) to the ground;
**in that** the second transmission chain (116) is capable of demodulating the bursts received free of collision and then of retransmitting them immediately to the ground; and
**in that** the mass storage device (110) is capable of independently saving each of the AIS output signals received at the same time by the receiving antennas and digitised (S₁(t), S₂(t), S₃(t), S4(t), S₅(t)) respectively by the analogue/digital converters (CAN₁, CAN₂, CAN₃, CAN₄, CAN₅), only when the burst whereof the demodulation is sought has a collision, i.e. is affected or has a probability higher than a predetermined threshold of being affected by a collision with another burst.

2. Payload according to claim 1, **characterised in that** the second transmission chain (116) is capable of immediately retransmitting the demodulated collision-free bursts to local stations (18; 19) when at least one local station (18; 19) is visible from the satellite (4).

3. Payload according to either one of claims 1 or 2, **characterised in that** the second transmission chain (116) is capable of extracting, for a given successfully demodulated burst, location information of the ship (8, 10; 12) that transmitted the demodulated burst, of determining a local home station (18; 19) of the transmitting ship (8, 10; 12) and of retransmitting immediately to the local station (18; 19) the demodulated burst when the local station (18; 19) is visible from the satellite.

4. Payload according to any one of claims 1 to 3, **characterised in that** the second transmission chain (116) is capable of processing an output signal from a reception antenna (An₂) and comprising at least one demodulator (118) and a second transmitter (50).

5. Payload according to any one of claims 1 to 4, **characterised in that** it does not have a unit for processing output signals by weighted and/or phase-shifted linear combination that are received at the same time.

6. Payload according to any one of claims 1 to 5, **characterised in that** the antennas (An₁, An₂, An₃, An₄, An₅) are of the patch or helical type.

7. Payload according to any one of claims 1 to 6, **characterised in that** it comprises five antennas (An₁, An₂, An₃, An₄, An₅).

8. Payload according to claim 7, **characterised in that** the antennas (An₁, An₂, An₃, An₄, An₅) are disposed at the four corners of a square and at its centre, the length of the square (L) being between 60 and 190 cm.

9. Payload according to any one of claims 1 to 8, **characterised in that** the predetermined threshold is equal to or greater than 0.7.

10. Payload according to any one of claims 1 to 9, **characterised in that** it comprises a means of control (114) of the mass storage device (110) and of determination of the collision status of the burst, having an input terminal (136) and an output terminal (138) connected to the mass storage device (110),
the input terminal (136) being capable of receiving a signal representative of the collision status of the burst whereof the demodulation is sought,
the output terminal (138) being capable of furnishing a signal indicating the collision status of the burst, either a presence or absence of collision depending on the input signal, and
the mass storage device (110) is capable of independently recording the digitised signals received (S₁(t), S₂(t), S₃(t), S₄(t), S₅(t)), for the purpose of immediate or subsequent retransmission, when the collision status furnished by the output terminal indicates a collision presence.

11. Payload according to claim 7, **characterised in that** the signal representative of the collision status is the degree of densities of AIS transmitters contained in the visibility area (26) overflown by the satellite (4), and **in that** the collision status of the burst indicates a collision presence when the satellite (4) overflies a predetermined reception coverage area (26) classified as dense.

12. Payload according to claim 10, **characterised in that** the second transmission chain (116) is capable of furnishing to the control means (114) a signal representative of the collision status of the burst received, either a status free of collision or a status with collision.

13. Payload according to any one of claims 1 to 12, **characterised in that** it comprises a retransmission control means (114) comprising an output terminal capable of furnishing an activation signal of the retransmission.

14. Payload according to any one of claims 1 to 8, **characterised in that** the mass storage device (110) is capable of permanently saving, separately, each of the AIS output signals received at the same time by the reception antennas and digitised (S₁(t), S₂(t), S₃(t), S₄(t), S₅(t)) respectively by the analogue/digital converters (CAN₁, CAN₂, CAN₃, CAN₄, CAN₅) and the first chain is capable of retransmitting all of the saved signals corresponding to all of the bursts received, including the bursts corresponding to bursts successfully demodulated by the second chain.

15. Satellite system integrated into an AIS type ground-based marine navigation system intended for monitoring maritime routes of ships comprising:
a constellation of moving satellites (4), each satellite (4) comprising a payload (42) according to any one of claims 1 to 11,
at least one ground-based processing centre (14) capable of receiving the separately saved signals Sᵢ(t) in the mass storage device (110) of a satellite (4) corresponding to the signals of a same burst received at the same time and associated respectively with different reception antennas (Anᵢ) of indices i, of assigning to each received AIS signal Sᵢ(t) from a reception antenna of index i an associated pair (Aᵢ, ϕᵢ) of real values formed by an amplitude factor Aᵢ and a phase shift ϕᵢ, and of combining the weighted signals Sᵢ(t) respectively by the amplitudes Aᵢ and phase shifted respectively by the phase shifts ϕᵢ to form a resulting signal R(t),
at least a second local satellite monitoring station (18, 19) capable of receiving the bursts demodulated on board satellites (4) and immediately retransmitted.

16. System according to claim 15, **characterised in that** the ground-based processing centre (16) comprises an input (54) capable of receiving identification information of the area (26) overflown by the associated satellite (4) at the time (t) of reception of the AIS signal.

17. Processing method implemented in a satellite system defined according to claim 15, comprising the steps consisting of:
receiving (310) on the ground on a first radio link (52) signals Sᵢ(t) emitted at the same time respectively from antennas (Anᵢ associated with a satellite (4),
determining (312) a succession of coefficients (Aᵢ, ϕᵢ) corresponding to a deferred processing beam-forming network of an antenna pattern resulting from all the antennas (Anᵢ) of the satellite (4) allowing the reception of interfering bursts situated in predetermined areas either to be cancelled, or the directivity to be increased towards areas from which the bursts for which demodulation is sought are transmitted,
assigning (314) to each AIS signal Sᵢ(t) received from an index i reception antenna the associated pair (Aᵢ, ϕᵢ) of real values formed by an amplitude Aᵢ and a phase shift ϕᵢ, and
combining (316) the signals Sᵢ(t) weighted respectively by the amplitudes Aᵢ and phase-shifted respectively by the phase shifts ϕᵢ to form a resulting signal R(t),
receiving on a second radio link (53) AIS bursts successfully demodulated on board a satellite and immediately retransmitted when a local station is visible by the satellite.

18. Method according to claim 17, **characterised in that** it comprises the steps consisting of:
acquiring (322) by the processing centre (16) information for identification of the area (26) overflown by the satellite (4), said information being associated with the time of reception (t) of the AIS signals (Sᵢ(t)),
determining (324) the succession of coefficients (Aᵢ, ϕᵢ) corresponding to a beam-forming network for deferred processing from an equivalent antenna pattern resulting from all of the antennas of the satellite as a function of the information identifying the area overflown by the satellite (4).

19. Method according to claim 17, **characterised in that** it comprises the step consisting of
assigning the succession of coefficients (1, 0) to each signal Sᵢ(t) received.

20. Method according to any one of claims 17 to 19, **characterised in that** it comprises the steps consisting of:
acquiring by the satellite station information identifying the area overflown by the satellite associated with the time of reception of the AIS signals (Sᵢ(t)),
assigning the succession of coefficients (1, 0) to each signal Sᵢ(t) received when the overflown area is an area that is not dense.

21. Processing method according to claim 17, **characterised in that** it comprises the steps consisting of:
transmitting by the satellite all the digitised signals (Sᵢ(t)) when the satellite flies over a dense area,
transmitting by the satellite the digitised signals (Sᵢ(t)) from a detected burst affected by collision when the satellites fly over an area that is not dense,
acquiring by the ground-based processing centre (16) information for identification of the area (26) overflown by the associated satellite at the time of reception (ₜ) of the AIS signals (Si(t)),
receiving signals Sᵢ(t) on the ground issued respectively from the associated antennas Anᵢ when they are transmitted by the satellite (4),
determining a succession of coefficients (Aᵢ, ϕᵢ corresponding to a beam-forming network for deferred processing from an antenna pattern resulting from all of the antennas of the satellite as a function of information identifying the area, when the overflown area is a dense area,
assigning the succession of coefficients (1, 0) to each signal Sᵢ(t) received when the overflown area is an area that is not dense,
assigning to each AIS signal Sᵢ(t) received from an index i reception antenna the associated pair (Aᵢ, ϕᵢ) of real values determined when the area overflown is dense, and
combining the signals Si(t) weighted respectively by the amplitudes Aᵢ and phase shifted respectively by the phase shifts ϕᵢ to form a resulting signal R(t).
